# EUROPEAN PATENT SPECIFICATION

(11) **EP 3 371 108 B1**
(45) Date of publication and mention of the grant of the patent: **03.06.2020**
(21) Application number: 16823057.1
(22) Date of filing: 21.10.2016
(51) Int. Cl.: C02F 1/40, B01D 17/02, B01D 17/12, E02B 7/28

(54) **AUTOMATIC SYSTEM FOR BLOCKING AND RECOVERING POLLUTANTS DISPERSED IN FLUIDS**
AUTOMATISCHES SYSTEM ZUR SPERRUNG UND RÜCKGEWINNUNG VON DISPERSEN VERUNREINIGUNGEN IN EINEM FLUID
SYSTÈME AUTOMATIQUE POUR LE BLOCAGE ET RÉCUPÉRATION DES POLLUANTS DISPERSES DANS UN FLUIDE

(30) Priority: 03.11.2015 IT UB201586622 U
(43) Date of publication of application: 12.09.2018
(73) Proprietor: Heureka Ambiente S.r.l., 47923 Rimini (RN) (IT)
(72) Inventor: PALMIERI, Gabriele, 47826 Villa Verucchio (RN) (IT)
(74) Representative: Santi, Filippo
(86) International application number: PCT/IT2016/000247
(87) International publication number: WO 2017/077561

(56) References cited:
- EP-A1- 2 865 820
- WO-A1-2010/088731
- JP-A- H0 820 386
- JP-A- 2000 070 922
- US-A- 5 067 850
- US-A- 5 160 036

## Description

The present invention relates to an automatic system for blocking and recovering pollutants dispersed in fluids.

More specifically the invention concerns a system of the above kind, studied and realized in particular to intercept, block and recover pollutants that are accidentally dispersed or which are already present in the fluids contained in closed or open pipes, in open or covered channels, in oil extraction tanks and in waterways such as rivers, docks or port-channels, for which the protection function from accidental contamination of pollutants or the pollutant recovery is necessary.

In the following, the description will be directed to the protection of an open waterway, but it is clear that the same should not be considered limited to this specific use.

As is well known currently systems of detection and blocking pollutants discharged into open or closed conduits exist.

Said systems are usually manually actuated by an operator prepared to control these waterways or ducts.

There are also pollutants detection and blocking automatic systems, which nevertheless have complex structures and are hardly to adapt to different application areas.

Systems for recovery of polluting substances are also known, however, they are often to be separated from the systems that detect and block the polluting substances or they are also manual systems operable by an operator in charge.

The relevant prior art includes also the patent applications US 5067850 A, WO 2010/088731 A1, JP 2000070922 A, JP H0820386, EP 2865820 A1 and US 5160036 A.

It seems evident that these systems have considerable disadvantages, since often the detection, blocking and recovery of the polluting substances are not made from the same system.

A further disadvantage is due to the structural complexity of the known systems which involves a difficult installation in different fields.

In the light of the above, it is, therefore, object of the present invention to provide an automatic blocking and recovery system of polluting substances dispersed in the fluids, which guarantees an immediate recovery of the pollutants.

A further object of the present innovation is to provide a structurally simple system that can be installed in different fields.

It is therefore specific object of the present invention an automatic system for blocking and recovery pollutants dispersed in a fluid, comprising blocking means for the blocking and the containment of said pollutants, capable of assuming a rest position, in which said blocking means are out of said fluid, and a working position, in which said blocking means block said pollutants dispersed in said fluids, position sensor means for detecting the position of said blocking means with respect to said fluid, and a control unit operatively connected with said position sensor means, for receiving said blocking means of said location data, said control unit being configured to make a comparison among the preset data of the mutual position between the blocking means and said fluid, so as to constantly contact the free surface of said fluid, and said position data received from said position sensor means, so as to transmit a closing signal of said system, by passing said blocking means from said rest position to said working position to follow the displacement of the free surface of said fluid.

Further according to the invention, said control unit comprises a PLC connected to said control unit comprising said predetermined data of the mutual position between said blocking means and said fluid, and the preset comparison logic of said data, and a motor.

Further according to the invention, said blocking means comprise a first support, installed on one end of a conduct, a second support, installed on the opposite end where, on which is installed said first support, a bulkhead slidably coupled with said first and second support such that, in said rest position, said bulkhead is placed out of said fluid, while in said working position said bulkhead is partially or completely immersed in said fluid.

Still according to the invention, said bulkhead has a lower end, on which a flow diverter is coupled, suitable to mitigate the turbulence generated by the impact of said fluid with said bulkhead.

Further said position sensor means detect the distance between the free surface of said fluid free surface and the bottom of said conduct and the distance between said lower end of said bulkhead and the fluid free surface and send said data to said control unit to be compared according to said predetermined logic stored in said PLC.

Preferably according to the invention, said flow diverter is inverted "V" shaped.

Still according to the invention, in proximity to said flow diverter of said bulkhead an opening for the passage of said fluid is formed.

Further according to the invention, the rear of said opening, said recovery and containing means of said pollutants blocked by said bulkhead are placed.

Further according to the invention, said recovery and containment means of said pollutants are coupled to a drain pump, which is activated at predetermined time intervals by said control unit for emptying said containment and recovery means of said pollutants.

Preferably according to the invention, said position sensor means are ultrasonic or laser sensors.

Further according to the invention, said system comprises chemical sensor means immersed in, or in contact with said fluid for the detection of pollutants, which send the signal to said control unit for the passage of said blocking means from said rest position to said working position.

Preferably according to the invention, said system comprises temperature sensor means for detecting the temperature of said fluid.

Preferably according to the invention, said first and second support can translate on guides which extend parallel to the direction of said fluid flow.

Preferably according to the invention, said first and second support can be movable with respect to a rotation pin, so as to incline said bulkhead compared to the direction of the fluid flow.

Preferably according to the invention, said system comprises velocity sensor means, immersed in said fluid, to detect the flow velocity of said fluid so that said control unit regulates the inclination of said bulkhead with respect to the direction of said fluid flow.

Still according to the invention, said system comprises a position transducer or encoder to perform a step-by-step detection of the movement of said motor, which drives said bulkhead, so that, in case of variations of the free surface of said fluid, said encoder compensates any phase shifts of the position of said lower end of said bulkhead with respect to the free surface of said fluid, in accordance with the predetermined logic operation stored in said PLC.

Preferably according to the invention, said system comprises a remote alarm device connected with said control unit, suitable to emit sound and/or visual alarm signals during operation of said system.

The present invention will be now described, for illustrative but not limitative purposes, according to its preferred embodiments, with particular reference to the figures of the enclosed drawings, wherein:

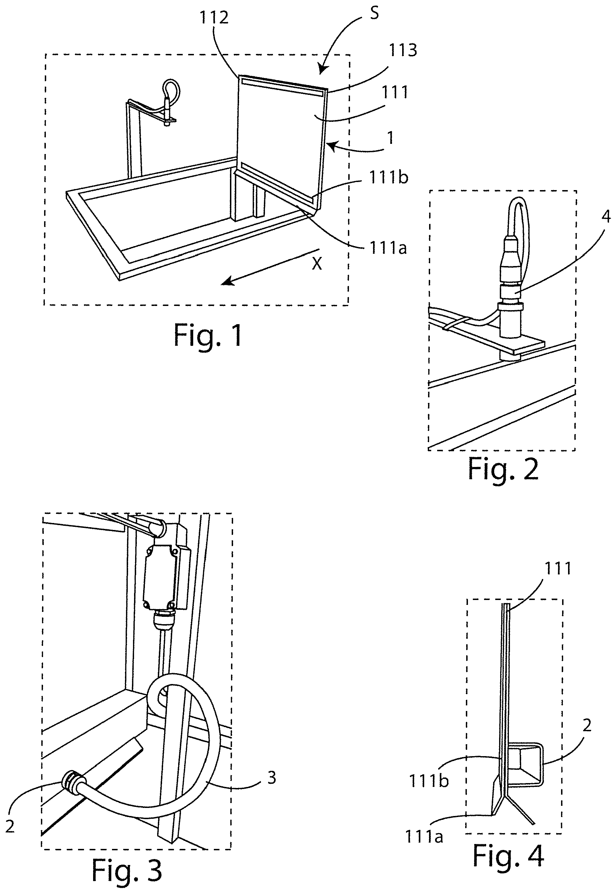

figure 1 shows a perspective side view of the automatic blocking and recovery system of polluting substances dispersed in the fluid, object of the present invention;
figure 2 shows a perspective view of a detail of figure 1;
figure 3 shows a rear view of the system object of the present invention; and
figure 4 shows a side view of a detail of the system object of the present invention.

In the various figures, similar parts will be indicated by the same reference numbers.

Referring to the attached figures, the automatic system S for blocking and recovery pollutants dispersed in the fluids, object of the present invention, essentially comprises a whole electric operation control unit of the automatic system S, pollutants blocking means 1, a remote alarm device connected with said control unit, recovery and containment means 2 of said pollutants blocked by said blocking means 1, position sensor means 4 for detecting the bottom of the conduct and of the free surface of the fluid, and, optionally, chemical sensor means immersed in, or in contact with, the fluid to be monitored, for detecting the possible presence of pollutants, temperature sensor means, for detecting the temperature of the monitored fluid, and velocity sensor means for detecting the velocity of the monitored fluid flow.

The automatic system S described here is applied on an open conduct, in which a fluid flows in X direction. In this case, the system S allows the detection of pollutants that are accidentally poured into said open conduct.

Said electric operation control unit of the system S comprises a PLC connected to an electrical control unit, both coupled to a motor to ensure the overall electrical operation of said system S.

Said motor is provided with a position transducer or encoder for the step-by-step displacement detection of said system S, as it will be described in detail hereinafter.

Said remote alarm device connected to said control unit is adapted to emit sound and/or visual alarm signals during the operation of said system S, as it will be described in detail below.

The blocking means 1 comprise a slidably coupled bulkhead 111, in a direction perpendicular to the X direction of the fluid flow, to a first 112 and a second 113 support.

Said first 112 and second 113 support are installed at the ends of said conduct, so as to cover the full width.

In a variant of said system S, in particular when said system S is installed on de-oiling tanks, said first 112 and second 113 support can translate on guides, which extend parallel to the direction X of the flowing fluid, so that also said bulkhead 111 can slide parallel to said direction X.

In a further variant of said system S, said first 112 and second 113 support can be movable with respect to a rotation pivot, so as to incline said bulkhead 111 with respect to said X direction of the fluid flow.

Said bulkhead 111 is capable of moving from a rest position, in which it is substantially placed at the end of the stroke end of said first 112 and second 113 support, outside of said fluid, to a working position, in which said bulkhead 111 is immersed in the fluid.

Said bulkhead 111 is provided with a flow diverter 111a, positioned on the lower end of said bulkhead 111, which is immersed in said fluid.

Said flow diverter 111a reduces the turbulence generated by the impact of the fluid with said bulkhead 111 and mechanically breaks up the pollutants supernatant.

In the present embodiment, said flow diverter 111a is substantially inverted "V" shaped, but it can also have different shapes.

In proximity of said flow deflector 111a, a opening 111b for the passage of the fluid is formed on said bulkhead 111.

Behind said opening 111b, recovery and containment means 2 of said blocked pollutants are placed, in particular a tank for containing said blocked pollutants.

Said tank 2 is coupled with a drain pump 3, which is activated at predetermined time intervals, for emptying said tank from said collected pollutants.

Said position sensor means 4, for example an ultrasonic or laser sensors, are positioned above the free surface of the fluid. They measure the distance between the free surface of said fluid and the bottom of the open conduct, in which it is contained, and also measure the distance between said lower end of said bulkhead 111 and said free surface.

Said position sensor means 4 send the signal to said control unit, which controls the displacement of said bulkhead 111, in such a way that said bottom end is always in contact with the free surface of the fluid.

As described above, optionally chemical sensor means for the detection of polluting substances immersed in said fluid may be present.

Said chemical sensor means send the signal to said control unit, which activates said bulkhead 111 for the passage from said rest position to said working position.

Said system S may optionally comprise temperature sensor means, for detecting the temperature of the fluid, immersed in said fluid.

If the temperature of the measured fluid falls below a predetermined value, said control unit stops the operation of said drain pump 3.

The variant of the system S described above comprising said first 112 and second 113 support movable with respect to a rotation pin may comprise a velocity sensor, immersed in said fluid, which detects the flow velocity of said fluid, so that the control unit regulates the inclination of said bulkhead 111.

Optionally said bulkhead 111 may be provided with nozzles for the emission of chemical substances such as dispersants, detergents and the like, for facilitating the decomposition of said pollutants present in said fluid.

The operation of the system S described above is as follows.

When an operator considers necessary to use said system S, for example on a closed conduct, he activates said first 112 and second 113 support on said closed conduct, so as to cover the entire width.

Subsequently said operator activates said system S. Said control unit transmits a closing signal to said motor, which in its turn drives said bulkhead 111.

Said bulkhead 111 passes from said initial rest position, in which it is outside from said fluid, to said working position, in which it is partially immersed in said fluid, particularly in which said lower end of said bulkhead 111 is immersed in said fluid.

Toghether with the activation of said partition 111, the aforementioned control unit activates said alarm device, which emits sound and/or acoustic signals, to indicate the operation of said system S.

Toghether with to the activation of said bulkhead 111, said position sensor means 4 measure the distance between the free surface of said fluid and the bottom of the open conduct, and the distance between said lower end of said bulkhead 111 and the free surface of said fluid.

These measurements are sent to said control unit that carries out an interpolation of the data, according to a predetermined logic operation stored in said PLC, so that said lower end of said bulkhead 111 is immersed in said fluid.

Consequently, said opening 111b is immersed partially or entirely in said fluid, so that said pollutants can pass through said opening 111b and can be collected in said tank 2.

Said encoder makes a step-by-step detection of the movement, for example the rotation, of said motor, which drives said bulkhead 111, so that, in case of variations of the free surface of said fluid, said encoder compensates any phase shifts of the position of said lower end of said bulkhead 111 with respect to the free surface of said fluid, according to the predetermined logic operation stored in said PLC.

As described above, while said lower end of said bulkhead 111 is immersed in said fluid, also said diverter 111a of the flow is immersed in said fluid, so as to mitigate the turbulence generated by the impact of the fluid with said bulkhead 111.

Periodically said control unit activates said drain pump 3 to remove the pollutants accumulated in said tank 2.

After the blocking and recovery step of said pollutants, the operator turns off said system S and said control unit sends an opening signal of said system S to the motor that brings back said bulkhead in said rest position.

The operation of said system S, in the variant in which there are chemical sensor means for the detection of pollutants, when said chemical sensor means detect the presence of pollutants in said fluid, transmit a closing signal to said control unit, which activates said motor for bringing said bulkhead 111 from said rest position to said working position.

The operation of said system S, in the variant in which said first 112 and second 113 support are movable with respect to a rotation pivot, said velocity sensor means measure the flow velocity of said fluid, transmit the data to said control unit, and then to said PLC, to adapt the inclination of said bulkhead 111 and thus of said flow deflector 111a, to the tangent of the fluid flow lines, so as to minimize the resistance of said bulkhead 111 with respect to said fluid, compatibly with the blocking of said polluting substances.

It is clear that the automatic system S described above in its various implementation forms allow the blocking and the recovery of polluting substances immersed in the monitored fluids, by means of a simple installation structure in different operating environments.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Automatic system (S) for blocking and recovering pollutants dispersed in a fluid flowing in X direction in an open conduct, comprising:
blocking means (1) for the blocking of said pollutants, capable of assuming a rest position, in which said blocking means (1) are out of said fluid, and a working position, in which said blocking means (1) block said pollutants dispersed in said fluids,
a control unit for the operation of said automatic system (S), connected to said blocking means (1),
a chemical sensor means immersed in, or in contact with said fluid for the detection of pollutants, capable for sending a corresponding signal to said control unit, for the passage of said blocking means (1) from said rest position to said working position,
said blocking means (1) comprising a first support (112), installed on one end of said open conduct,
a second support (113), installed on the opposite end where on which is installed said first support (112),
a bulkhead (111) slidably coupled with said first (112) and second (113) support such that, in said rest position, said bulkhead is placed out of said fluid, while in said working position said bulkhead (111) is partially or completely immersed in said fluid,
said bulkhead (111) has a lower end, on which a flow diverter is coupled (111a), suitable to mitigate the turbulence generated by the impact of said fluid with said bulkhead (111),
in proximity to said flow diverter (111a) of said bulkhead (111) an opening (111b) for the passage of said fluid is formed,
in the rear of said opening (111b), recovery and containing means (2) of said pollutants blocked by said bulkhead (111) are placed,
said recovery and containment means (2) of said pollutants are coupled to a drain pump (3), which is activated at predetermined time intervals by said control unit for emptying said containment and recovery means (2) of said pollutants,
said automatic system (S) comprises position sensor means (4) for detecting the bottom of the conduct, positioned above the free surface of the fluid, capable for measuring the distance between the free surface of said fluid and the bottom of said open conduct, and also for detecting the position of said blocking means (1) with respect to said fluid, and measuring the distance between said lower end of said bulkhead (111) and said free surface, and capable for sendig signal to said control unit, which controls the displacement of said bulkhead (111), in such a way that said bottom end is always in contact with the free surface of the fluid,
said control unit is operatively connected with said position sensor means (4), for receiving said location data of said blocking means (1), and said corresponding signal from said chemical sensor means, said control unit being configured to make a comparison among the preset data of the mutual position between the blocking means (1) and said fluid, so as to constantly contact the free surface of said fluid, and said position data received from said position sensor means (4), so as to transmit a closing signal of said system (S), by passing said blocking means (1) from said rest position to said working position to follow the displacement of the free surface of said fluid, so that said opening (111b) is immersed partially or entirely in said fluid, so that said pollutants can pass through said opening (111b) and can be collected in said containment means (2),
said control unit comprising a PLC connected to said control unit comprising said predetermined data of the mutual position between said blocking means (1) and said fluid, and the preset comparison logic of said data, and a motor, and
said system (S) further comprising a position transducer or encoder to perform a step-by-step detection of the movement of said motor, which drives said bulkhead (111), so that, in case of variations of the free surface of said fluid, said encoder compensates any phase shifts of the position of said lower end of said bulkhead (111) with respect to the free surface of said fluid, in accordance with the predetermined logic operation stored in said PLC.

2. System (S) according to any one of the preceding claims, **characterized in that** said flow diverter (111a) is inverted "V" shaped.

3. System (S) according to any one of the preceding claims, **characterized in that** said position sensor means (4) are ultrasonic or laser sensors.

4. System (S) according to any one of the preceding claims, **characterized in that** it comprises temperature sensor means for detecting the temperature of said fluid.

5. System (S) according to any one of the preceding claims, **characterized in that** said first (112) and second (113) support can translate on guides which extend parallel to the direction X of said fluid flow.

6. System (S) according to any of the preceding claims, **characterized in that** said first (112) and second (113) support can be movable with respect to a rotation pin, so as to incline said bulkhead (111) compared to the direction of the fluid flow.

7. System (S) according to the preceding claim, **characterized in that** it comprises velocity sensor means, immersed in said fluid, capable to detect the flow velocity of said fluid, to send a corresponding signal to said control unit which regulates the inclination of said bulkhead (111) with respect to the direction of said fluid flow.

8. System (S) according to any one of the preceding claims, **characterized in that** it comprises a remote alarm device connected with said control unit, suitable to emit sound and/or visual alarm signals during operation of said system (S).

## Patentansprüche

1. Automatisches System (S) zum Blockieren und Rückgewinnen von Schadstoffen, die in einem in einer offenen Leitung in X-Richtung strömenden Fluid dispergiert sind, umfassend:
Blockiermittel (1) zum Blockieren der Schadstoffe, die eine Ruheposition, in der sich die Blockiermittel (1) außerhalb des Fluids befinden, und eine Arbeitsposition, in der die Blockiermittel (1) die in den Fluiden dispergierten Schadstoffe blockieren, einnehmen können,
eine Steuereinheit zum Betrieb des automatischen Systems (S), die mit den Blockiermitteln (1) verbunden ist,
ein chemisches Sensormittel, eingetaucht in das Fluid oder damit in Kontakt stehend, zur Detektion von Schadstoffen, das ein entsprechendes Signal für den Wechsel der Blockiermittel (1) von der Ruheposition in die Arbeitsposition an die Steuereinheit senden kann,
wobei die Blockiermittel (1) einen an einem Ende der offenen Leitung installierten ersten Träger (112) umfassen,
einen zweiten Träger (113), installiert am gegenüberliegenden Ende von wo der erste Träger (112) installiert ist,
eine Trennwand (111), die mit dem ersten (112) und zweiten (113) Träger verschiebbar gekoppelt ist, sodass die Trennwand in der Ruheposition außerhalb des Fluids platziert ist, während die Trennwand (111) in der Arbeitsposition teilweise oder vollständig in das Fluid eingetaucht ist,
wobei die Trennwand (111) ein unteres Ende aufweist, mit dem ein Strömungsteiler (111a) gekoppelt ist, der geeignet ist, um die durch das Auftreffen des Fluids auf die Trennwand (111) erzeugte Turbulenz abzuschwächen,
in der Nähe des Strömungsteilers (111a) der Trennwand (111) eine Öffnung (111b) für den Durchtritt des Fluids gebildet ist,
an der Rückseite der Öffnung (111b) Rückgewinnungs- und Einschlussmittel (2) der von der Trennwand (111) blockierten Schadstoffe platziert sind,
wobei die Rückgewinnungs- und Einschlussmittel (2) der Schadstoffe mit einer Absaugpumpe (3) gekoppelt sind, die in vorgegebenen Zeitabständen von der Steuereinheit zum Entleeren der Rückgewinnungs- und Einschlussmittel (2) der Schadstoffe aktiviert wird,
das automatische System (S) Positionssensormittel (4) zum Detektieren des Bodens der Leitung, positioniert über der freien Oberfläche des Fluids, die die Entfernung zwischen der freien Oberfläche des Fluids und dem Boden der offenen Leitung messen können, sowie zum Detektieren der Position der Blockiermittel (1) in Bezug auf das Fluid und zum Messen der Entfernung zwischen dem unteren Ende der Trennwand (111) und der freien Oberfläche, und die ein Signal an die Steuereinheit senden können, die die Versetzung der Trennwand (111) in einer Weise steuert, dass das Bodenende stets mit der freien Oberfläche des Fluids in Kontakt steht, umfasst,
die Steuereinheit zum Empfangen der Ortsdaten der Blockiermittel (1) und des entsprechenden Signals von dem chemischen Sensormittel funktionsfähig mit den Positionssensormitteln (4) verbunden ist, wobei die Steuereinheit konfiguriert ist, um einen Vergleich vorzunehmen unter den voreingestellten Daten der wechselseitigen Position zwischen den Blockiermitteln (1) und dem Fluid, um die freie Oberfläche des Fluids durchgehend zu kontaktieren, und den von den Positionssensormitteln (4) empfangenen Positionsdaten, um durch Übergehenlassen der Blockiermittel (1) von der Ruheposition in die Arbeitsposition zum Mitverfolgen der Versetzung der freien Oberfläche des Fluids ein Schließsignal des Systems (S) zu übertragen, sodass die Öffnung (111b) teilweise oder gänzlich in das Fluid eingetaucht ist, sodass die Schadstoffe die Öffnung (111b) passieren können und in dem Einschlussmittel (2) gesammelt werden können,
die Steuereinheit eine mit der Steuereinheit verbundene SPS, umfassend die vorgegebenen Daten der wechselseitigen Position zwischen den Blockiermitteln (1) und dem Fluid und die voreingestellte Vergleichslogik der Daten sowie einen Motor umfasst und
das System (S) weiter einen Positionsgeber oder -codierer umfasst, um eine schrittweise Detektion der Bewegung des Motors durchzuführen, der die Trennwand (111) antreibt, damit der Codierer im Falle von Veränderungen der freien Oberfläche des Fluids jegliche Phasenverschiebungen der Position des unteren Endes der Trennwand (111) in Bezug auf die freie Oberfläche des Fluids in Übereinstimmung mit der in der SPS gespeicherten vorgegebenen logischen Verknüpfung ausgleicht.

2. System (S) nach einem der vorstehenden Ansprüche, **dadurch gekennzeichnet, dass** der Strömungsteiler (111a) die Form eines umgekehrten "V" besitzt.

3. System (S) nach einem der vorstehenden Ansprüche, **dadurch gekennzeichnet, dass** die Positionssensormittel (4) Ultraschall- oder Lasersensoren sind.

4. System (S) nach einem der vorstehenden Ansprüche, **dadurch gekennzeichnet, dass** es Temperatursensormittel zum Detektieren der Temperatur des Fluids umfasst.

5. System (S) nach einem der vorstehenden Ansprüche, **dadurch gekennzeichnet, dass** sich der erste (112) und zweite (113) Träger auf Führungen, die sich parallel zu der X-Richtung der Fluidströmung erstrecken, verlagern können.

6. System (S) nach einem der vorstehenden Ansprüche, **dadurch gekennzeichnet, dass** der erste (112) und zweite (113) Träger in Bezug auf einen Drehzapfen beweglich sein können, um die Trennwand (111) verglichen mit der Richtung der Fluidströmung zu neigen.

7. System (S) nach einem der vorstehenden Ansprüche, **dadurch gekennzeichnet, dass** es in das Fluid eingetauchte Geschwindigkeitssensormittel umfasst, die die Strömungsgeschwindigkeit des Fluids detektieren können, um ein entsprechendes Signal an die Steuereinheit zu senden, die die Neigung der Trennwand (111) in Bezug auf die Richtung der Fluidströmung reguliert.

8. System (S) nach einem der vorstehenden Ansprüche, **dadurch gekennzeichnet, dass** es eine mit der Steuereinheit verbundene Fernwarnungsvorrichtung umfasst, die geeignet ist, um während des Betriebs des Systems (S) Ton- und/oder visuelle Warnsignale auszugeben.

## Revendications

1. Système automatique (S) pour bloquer et récupérer des polluants dispersés dans un fluide s'écoulant dans une direction X dans un conduit ouvert, comprenant :
des moyens de blocage (1) pour le blocage desdits polluants, capables de prendre une position de repos, dans laquelle lesdits moyens de blocage (1) sont à l'extérieur dudit fluide, et une position de travail, dans laquelle lesdits moyens de blocage (1) bloquent lesdits polluants dispersés dans lesdits fluides,
une unité de commande pour le fonctionnement dudit système automatique (S), connectée auxdits moyens de blocage (1),
un moyen de détection de substance chimique immergé dans, ou en contact avec ledit fluide pour la détection de polluants, capable d'envoyer un signal correspondant à ladite unité de commande, pour le passage desdits moyens de blocage (1) de ladite position de repos à ladite position de travail,
lesdits moyens de blocage (1) comprenant un premier support (112), installé sur une extrémité dudit conduit ouvert,
un deuxième support (113), installé sur l'extrémité opposée sur laquelle est installé ledit premier support (112),
une cloison (111) couplée de manière coulissante auxdits premier (112) et deuxième (113) supports de sorte que, dans ladite position de repos, ladite cloison est placée à l'extérieur dudit fluide, tandis que dans ladite position de travail ladite cloison (111) est partiellement ou complètement immergée dans ledit fluide,
ladite cloison (111) a une extrémité inférieure, sur laquelle un déflecteur d'écoulement est couplé (111a), approprié pour atténuer la turbulence générée par l'impact dudit fluide avec ladite cloison (111),
à proximité dudit déflecteur d'écoulement (111a) de ladite cloison (111) une ouverture (111b) pour le passage dudit fluide est formée,
à l'arrière de ladite ouverture (111b), des moyens de récupération et de confinement (2) desdits polluants bloqués par ladite cloison (111) sont placés,
lesdits moyens de récupération et de confinement (2) desdits polluants sont couplés à une pompe de vidange (3), qui est activée à des intervalles de temps prédéterminés par ladite unité de commande pour vider lesdits moyens de confinement et de récupération (2) desdits polluants,
ledit système automatique (S) comprend des moyens de détection de position (4) pour détecter le fond du conduit, positionnés au-dessus de la surface libre du fluide, capables de mesurer la distance entre la surface libre dudit fluide et le fond dudit conduit ouvert, et également de détecter la position desdits moyens de blocage (1) par rapport audit fluide, et de mesurer la distance entre ladite extrémité inférieure de ladite cloison (111) et ladite surface libre, et capables d'envoyer un signal à ladite unité de commande, qui commande le déplacement de ladite cloison (111), d'une manière telle que ladite extrémité inférieure est toujours en contact avec la surface libre du fluide,
ladite unité de commande est connectée fonctionnellement auxdits moyens de détection de position (4), pour recevoir lesdites données de localisation desdits moyens de blocage (1), et ledit signal correspondant provenant dudit moyen de détection de substance chimique, ladite unité de commande étant configurée pour effectuer une comparaison parmi les données prédéfinies de la position réciproque entre les moyens de blocage (1) et ledit fluide, de façon à venir de manière constante en contact avec la surface libre dudit fluide, et lesdites données de position reçues desdits moyens de détection de position (4), de façon à transmettre un signal de fermeture dudit système (S), en faisant passer lesdits moyens de blocage (1) de ladite position de repos à ladite position de travail pour suivre le déplacement de la surface libre dudit fluide, de sorte que ladite ouverture (111b) est immergée partiellement ou entièrement dans ledit fluide, de sorte que lesdits polluants peuvent traverser ladite ouverture (111b) et peuvent être recueillis dans lesdits moyens de confinement (2),
ladite unité de commande comprenant un automate programmable connecté à ladite unité de commande comprenant lesdites données prédéterminées de la position réciproque entre lesdits moyens de blocage (1) et ledit fluide, et la logique de comparaison prédéfinie desdites données, et un moteur, et
ledit système (S) comprenant en outre un transducteur ou codeur de position pour mettre en œuvre une détection étape par étape du mouvement dudit moteur, qui entraîne ladite cloison (111), de sorte que, en cas de variations de la surface libre dudit fluide, ledit codeur compense d'éventuels déphasages de la position de ladite extrémité inférieure de ladite cloison (111) par rapport à la surface libre dudit fluide, conformément à l'opération logique prédéterminée stockée dans ledit automate programmable.

2. Système (S) selon l'une quelconque des revendications précédentes, **caractérisé en ce que** ledit déflecteur d'écoulement (111a) est en forme de « V » inversé.

3. Système (S) selon l'une quelconque des revendications précédentes, **caractérisé en ce que** lesdits moyens de détection de position (4) sont des capteurs à ultrasons ou laser.

4. System (S) selon l'une quelconque des revendications précédentes, **caractérisé en ce qu'**il comprend des moyens de détection de température pour détecter la température dudit fluide.

5. Système (S) selon l'une quelconque des revendications précédentes, **caractérisé en ce que** lesdits premier (112) et deuxième (113) supports peuvent se déplacer en translation sur des guides qui s'étendent parallèles à la direction X dudit écoulement de fluide.

6. Système (S) selon l'une quelconque des revendications précédentes, **caractérisé en ce que** lesdits premier (112) et deuxième (113) supports peuvent être mobiles par rapport à une broche de rotation, de façon à incliner ladite cloison (111) par comparaison avec la direction de l'écoulement de fluide.

7. Système (S) selon la revendication précédente, **caractérisé en ce qu'**il comprend des moyens de détection de vitesse, immergés dans ledit fluide, capables de détecter la vitesse d'écoulement dudit fluide, pour envoyer un signal correspondant à ladite unité de commande qui régule l'inclinaison de ladite cloison (111) par rapport à la direction dudit écoulement de fluide.

8. Système (S) selon l'une quelconque des revendications précédentes, **caractérisé en ce qu'**il comprend un dispositif d'alarme distant connecté à ladite unité de commande, approprié pour émettre des signaux d'alarme sonores et/ou visuels pendant le fonctionnement dudit système (S).
